Europäisches Patentamt

European Patent Office

Office européen des brevets

(19)

(11) Veröffentlichungsnummer: **0 256 518**
A1

(12) **EUROPÄISCHE PATENTANMELDUNG**

(21) Anmeldenummer: 87111707.3

(22) Anmeldetag: 12.08.87

(51) Int. Cl.³: **F 16 C 35/06**

(30) Priorität: 14.08.86 PL 261062

(43) Veröffentlichungstag der Anmeldung:
24.02.88 Patentblatt 88/8

(84) Benannte Vertragsstaaten:
CH DE FR GB IT LI SE

(71) Anmelder: OSRODEK BADAWCZO-ROZWOJOWY
OBRABIAREK I URZADZEN SPECJALNYCH
ul. Krancowa 9
P-61 022 Poznan(PL)

(72) Erfinder: Jedrzejewski, Jerzy, Prof. Dr.Mech.Eng.
ul. Kamienna 4 m 64
P-53-308 Wroclaw(PL)

(72) Erfinder: Weiss, Edmund Dr., Mech.Eng.
ul. Jaromira 13
P-61-062 Poznan(PL)

(74) Vertreter: Ahner, Francis et al,
CABINET REGIMBEAU 26, avenue Kléber
F-75116 Paris(FR)

(54) Wälzlager.

(57) Die Anmeldung betrifft Wälzlager, die insbesondere bei Werkzeugmaschinen, die mit thermisch belasteten Hochdrehspindeln vesehen sind, Verwendung finden. Der Vorschlag gemäss der Anmeldung löst die Aufgabe der Beseitigung des Einflusses der Temperaturänderungen auf den Wälzwiderstand und Leistungsverluste und gewährleistet die Aufrechterhaltung der Starrheit der Lagerung der Hochdrehwellen. Das Wälzlager besteht aus dem äusseren Ring (1), dem inneren Ring (2) und den Wälzkörpern (3), die als Kugeln oder Rollen ausgebildet sind. Das Wesen der Anmeldung besteht darin, dass das Wälzlager an der ganzen Sitzfläche bzw. in der Ausnehmung an einem Teil der Sitzfläche des äusseren Ringes (1) und des inneren Ringes (2), oder an der Sitzfläche nur des äusseren Ringes (1) bzw. an der Sitzfläche nur des inneren Ringes (2) eine Isolierschicht (4) eines Stoffes mit grossem Wärmewiderstand hat.

Die Dicke der Isolierschicht (4) beträgt von 0,01 bis 0,5 mm. Die Isolierschicht (4) besteht aus Kunststoff auf der Basis von organischen Polymeren bzw. aus einem keramischen Stoff.

Fig.1

EP 0 256 518 A1

Wälzlager

0256518

Das Gebiet der Technik. Die Erfindung betrifft das Wälzlager, das insbesondere in den Werkzeugmaschinen, die mit thermisch belasteten Hochdrehspindeln versehen sind, Verwendung findet.

Stand der Technik - Es ist aus der polnischen Patentschrift Nr 79419 die Lagerung der thermisch belasteten Welle bekannt. In dieser Lösung wurde selstständiger Zwanglauf des Kühlmittels verwendet, der die Wärme von rotierenden Welle entnimmt und sie mittels des inneren Gehäusemantels in die äussere Abkühlungsvorrichtung überträgt. Die Ausbildung des Zwischenlagerteiles der Welle in Form des Schraubenprofils vergrössert bedeutend die Kühlfläche der Welle.

Das technische Nachteil dieser Lösung ist ihr komplizierter Bau, der die Verwendung des zusätzlichen Kühlsystems erfordert. Die andere aus der polnischen Patentschrift Nr 92843 bekannte Lösung ist Kompensator /Ausgleicher/ der Änderung des Radialspieles in den Wälzlagern insbesondere für Werkzeugmaschinen-Spindelsätze. Diese Lösung besteht aus dem einerseits angeordneten Wälzlager, dem Ringzylinder, dessen Kammer durch den Plast ausgefüllt wird und mittels des Ringes, der die Rolle des Kolbens spielt, abgeschlossen wird, sowie aus dem andererseits angeordneten Wälzlager, dem Tellerfedersatz. Der Ringzylinder und der Federsatz steht mit dem inneren

Ring des Wälzlagers in Berührung. Der Lager ist an der Kegelfläche des Zapfens eingesetzt. Wenn es die Temperatur erhöht, vergrössert der Plast sein Volumen und schiebt den inneren Ring des Wälzlagers entlang der Achse des Kegelzapfens auf seinen kleineren Durchmesser weg und unterhält auf diese Weise das konstante Übermass zwischen dem Zapfen und innerem Ring des Lagers aufrecht. Wenn die Temperatur senkt, schieben die Tellerfeder den Lager auf den grösseren Durchmesser des Zapfens zurück auf. Die gestellte Lösung hat einen komplizierten Bau und Gewährleistet keine entsprechende Starrheit der Lagerung sowie die Flüssigkeit /Gewandheit/ der Verschiebungen. Die Verschiebung des inneren Ringes des Wälzlagers entlang der Zapfenachse verursacht den Verschleiss der inneren Fläche dieses Ringes und vergrössert den Spiel zwischen dem Zapfen und dem inneren Ring des Wälzlagers. Infolge der Lageänderung des inneren Ringes mit Rollen gegenüber dem äusseren Ring verschlimmen sich die Arbeitsbedingungen des Lagers und wird seine Festigkeit begrenzt. Ausserdem erfordert die Konstruktion sehr genaue Berechnung von Ausdehnungskoeffizienten des Stoffes, aus dem der Zapfen ausgeführt ist, Volumen und Ausdehnungskoeffizient des Plastes sowie auch präzise Auswahl der Tellerfeder. Es sind auch bekannt und allgemein verwendet die Lösungen, die in Erhöhung der Nachgie-

bigkeit des Lagersgehäuses z.B durch Ausbildung dieses Gehäuses in Form des Rohres bestehen.

Solche Lösung verkleinert die Starrheit der ganzen Anordnung und kompliziert die Konstruktion des Gehäuses.

Es werden auch weniger starre Lager verwendet, aber sie verursachen die Verminderung der Starrheit der ganzen Anordnung.

Das Wesen der Erfindung. Die Erfindung betrifft den Wälzlager, der aus dem äusseren Ring, innerem Ring und den Wälzkörpern in Form der Kugeln bzw. Rollen besteht.

Das Wesen der Erfindung besteht darin, dass der Wälzlager an den Sitzflächen des äusseren Ringes und inneren Ringes eine Isolierschicht des Materials mit grossem Wärme-widerstand, deren Dicke von 0,01 bis 0,5 mm beträgt, aufweist, wobei er hat die Isolierschicht an der ganzen Fläche des äusseren Ringes und inneren Ringes bzw. in der Ausnehmung an einem Teil der Sitzfläche des äusseren Ringes und des inneren Ringes.

Am günstigsten ist dann, wenn er die Isolierschicht nur am Sitzfläche des inneren Ringes aufweist, wobei er diese Schicht an ganzen Sitzfläche des inneren Ringes bzw. in der Ausnehmung an einem Teil der Sitzfläche des inneren Ringes hat. Günstig ist es auch, wenn er die Isolierschicht nur an der Sitzfläche des äusseren Ringes hat, wobei er diese Schicht an der ganzen Sitzfläche des äusseren Ringes bzw. in der Ausnehmung an einem Teil der Sitzfläche des äusseren Ringes hat.

Die Sitzfläche bildet im Falle des äusseren Ringes die äussere zylindrische Fläche des äusseren Ringes, und die Sitzfläche des inneren Ringes dagegen ist die Öffnung, also die innere Fläche des inneren Ringes. Die Isolierschicht bildet der Kunststoff vorzugsweise auf dem Basis von organischen Polymeren oder der keramische Stoff. Der wesentliche technische Vorteil, der sich aus der Anwendung des Wälzlagers gemäss der Erfindung ergibt, ist die Gewährleistung der feste Starrheit der Hochdrehwellenlagerung sowie Beseitigung der Beeinflussung der Temperaturänderungen auf Wälzenwiderstand und Leistungsverlusste. Der Wälzlager gemäss der Erfindung vereinfacht bedeutend das Verfahren zur Lagerung der Hochdrehwellen.

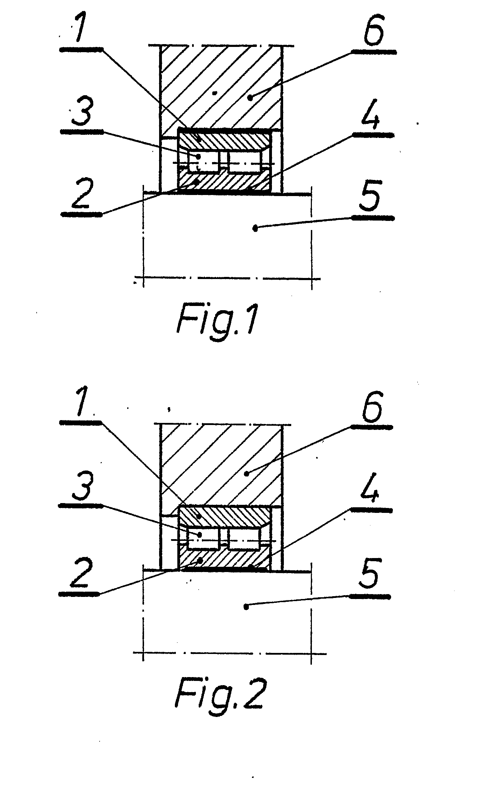

Erläuterung der Zeichnung. Gegenstand gemäss der Erfindung wurde in den Anführungsbeispielen in der Zeichnung dargestellt, wo Fig. 1 den Wälzlager mit der Isolierschicht an der ganzen Sitzfläche des äusseren Ringes und des inneren Ringes; Fig. 2 den Wälzlager mit der Isolierschicht in der Ausnehmung an einem Teil der Sitzfläche des inneren Ringes darstellt.

Die Ausführungsbeispiele der Erfindung.

Beispiel I. Wie aus der Fig. 1 ersichtlich ist, besteht der Wälzlager aus dem äusseren Ring 1 und inneren Ring 2, zwischen denen die Wälzkörper 3 in Form der Rollen angeordnet sind. Der Wälzlager weist an der ganzen Sitzfläche des äusseren Ringes 1 und des inneren Ringes 2 die Isolierschicht 4 mit einer Dicke von 0,02 mm auf, wobei die Isolierschicht 4 ist aus dem Kunststoff auf dem Basis von organischen Polymeren ausgebildet.

Beispiel II. Wie aus der Fig. 2 ersichtlich ist, besteht der Wälzlager aus dem äusseren Ring 1 und dem inneren Ring 2, zwischen denen die Wälzkörper 3 in Form der Rollen angeordnet sind. Der Wälzlager weist die Isolierschicht 4 in der Ausnehmung an einem Teil der Sitzfläche des inneren Ringes 2 mit einer Dicke von 0,5 mm auf. Die Isolierschicht 4 ist aus dem keramischen Stoff ausgebildet.

Im Falle der Lagerung der Hochdrehwellen, ist die intensive Wärmeabgabe hauptsächlich durch ungleichmässige Ausdehnung des äusseren Ringes 1 des Lagers und des inneren Ringes 2 des Lagers verursacht. Die thermische Ausdehnungsdifferenz des Ringes 1 und 2 verursacht das Klemmen der Wälzkörper 3 zwischen ihnen, was die Reibungskräfte vergrössert und die Erscheinung der progresiven Erhöhung der Temperatur des Lagers hervorruft. Die Isolierschicht 4 schützt an der Sitzfläche des äusseren Ringes 1 das Gehäuse
6 des Lagers vor der Wärmeströmmung, die durch Reibung hervorgerufen wird sowie vor überschüssiger
Erhitzung, und die Isolierschicht 4 an der Sitzfläche des inneren Ringes 2 dagegen verhindert
die unmittelbare Erhitzung der Hochdrehwelle und
die feste Starrheit der Lagerung gewährleistet.

1. Wälzlager bestehend aus äusserem Ring, innerem Ring und Wälzkörpern, die in Form der Kugel und der Rollen ausgebildet sind, dadurch gekennzeichnet, dass er an den Sitzflächen des äusseren Ringes /1/ und inneren Ringes /2/ die Isolierschicht /4/ des Materials mit grossem Wärmewiderstand aufweist.

2. Wälzlager nach Anspruch 1, dadurch gekennzeichnet, dass die Isolierschicht /4/ an der ganzen Sitzfläche des äusseren Ringes /1/ und inneren Ringes /2/ aufweist.

3. Wälzlager nach Anspruch 1, dadurch gekennzeichnet, dass die Isolierschicht /4/ in der Ausnehmung an einem Teil der Sitzfläche des äusseren Ringes /1/ und inneren Ringes /2/ aufweist.

4. Wälzlager nach Anspruch 1, dadurch gekennzeichnet, dass die Isolierschicht /4/ an der ganzen Sitzfläche des äusseren Ringes /1/ aufweist.

5. Wälzlager nach Anspruch 1, dadurch gekennzeichnet, dass die Isolierschicht /4/ in der Ausnehmung an einem Teil der Sitzfläche des äusseren Ringes /1/ aufweist.

6. Wälzlager nach Anspruch 1, dadurch gekennzeichnet, dass die Isolierschicht /4/ an der ganzen Sitzfläche des inneren Ringes /2/ aufweist.

7. Wälzlager nach Anspruch 1, dadurch gekennzeichnet, dass die Isolierschicht /4/ in der Ausnehmung an einem Teil der Sitzfläche des inneren Ringes /2/ aufweist.

0256518

8. Wälzlager nach Anspruch 1, dadurch gekennzeichnet, dass die Dicke der Isolierschicht /4/ von 0,01 bis 0,5 mm beträgt.

9. Wälzlager nach Anspruch 1, dadurch gekennzeichnet, dass die Isolierschicht /4/ der Kunststoff vorzugsweise auf Basis von organischen Polymeren bildet.

10. Wälzlager nach Anspruch 1, dadurch gekennzeichnet, dass die Isolierschicht /4/ der keramische Stoff bildet.

0256518

Fig.1

Fig.2

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl.4) |
|---|---|---|---|
| X | CH-A- 277 100 (ELECTROMECANIQUE) <br> * Figur 2 * <br> --- | 1,6,10 | F 16 C 35/06 |
| P,X | PATENT ABSTRACTS OF JAPAN, Band 10, Nr. 307 (M-527)[2363], 18. Oktober 1986; & JP-A-61 121 802 (KOYO SEIKO CO. LTD) 09-06-1986 (Kat. X) <br> * Zusammenfassung * <br> --- | 1,6,10 | |
| P,A | PATENT ABSTRACTS OF JAPAN, Band 10, Nr. 295 (M-523)[2351], 7. Oktober 1986; & JP-A-61 109 914 (KOYO SEIKO CO. LTD) 28-05-1986 (Kat. A) <br> --- | 1,10 | |
| A | GB-A- 17 110 (WIESELGREEN)(A.D. 1914) <br> * Insgesamt * <br> --- | 1-10 | |
| A | GB-A-1 573 913 (BOATMAN) <br> * Insgesamt * <br> --- | 1,4,9, 10 | |
| A | DE-A-3 028 106 (LAMB) <br> --- | | |
| A | US-A-3 524 687 (HALLERBACK) <br> --- | | |
| A | US-A-3 066 989 (MACHA) <br> --- | | |
| A | GB-A- 760 145 (ALUMINIUM FRANCAIS) <br> ----- | | |

| | | RECHERCHIERTE SACHGEBIETE (Int. Cl.4) |
|---|---|---|
| | | F 16 C <br> F 01 D <br> B 23 Q |

Der vorliegende Recherchenbericht wurde für alle Patentansprüche erstellt

| Recherchenort | Abschlußdatum der Recherche | Prüfer |
|---|---|---|
| DEN HAAG | 23-11-1987 | CRANE |